# EUROPÄISCHE PATENTSCHRIFT

(11) **EP 0 841 103 B1**
(45) Veröffentlichungstag und Bekanntmachung des Hinweises auf die Patenterteilung: **21.03.2001**
(21) Anmeldenummer: 97890217.9
(22) Anmeldetag: 04.11.1997
(51) Int. Cl.: B09C 1/00, C02F 1/00

(54) **Vorrichtung zum Dekontaminieren von Grundwasserströmen**
Device for decontaminating groundwater streams
Dispositif pour la décontamination des courants d'eaux souterraines

(30) Priorität: 12.11.1996 AT 197996
(43) Veröffentlichungstag der Anmeldung: 13.05.1998
(73) Patentinhaber: Porr Umwelttechnik GmbH, 1030 Wien (AT)
(72) Erfinder: Mader, Herbert, Dipl.-Ing., 1130 Wien (AT); Zorzi, Michael, Dipl.-Ing., 3002 Purkersdorf (AT)
(74) Vertreter: Widtmann, Georg, Dipl.-Ing. Dr. techn.

(56) Entgegenhaltungen:
- WO-A-93/22241
- DE-A- 4 431 331
- DE-C- 4 425 061
- GB-A- 2 289 688
- US-A- 5 527 457

## Beschreibung

Die Erfindung hat eine Vorrichtung zum Dekontaminieren von Grundwasserströmen mit einer ununterbrochenen im wesentlichen fluiddichten Wand, welche von einem unteren Grundwasserhorizont bis über einen oberen Grundwasserhorizont reicht und zumindest einen Bereich aufweist, welcher gezielt wasserdurchlässig ist.

Grundwasserströme dienen zur Wasserversorgung von insbesondere landwirtschaftlich genutzten Gebieten. Die Verbreitung von in Wasser löslichen oder suspendierbaren Stoffen, sei es umweltfreundlich oder umweltschädlich, erfolgt z. B. durch Oberflächenwässer, Flüsse aber auch Grundwasserströme. Bei oberirdischen und unterirdischen Verunreinigungen im Erdreich, z. B. von illegalen Mülldeponien, Dekontaminationen nach Betriebsunfällen, besteht die Gefahr, daß die Verunreinigungen entweder über den Grundwasserstrom selbst oder über die Oberflächenwässer in dem Grundwasserstrom verbreitet werden, welche zur Nutzung desselben entfernt werden müssen.

Zur Dekontaminierung von Grundwasserströmen ist zwischen zwei Systemen zu unterscheiden. Bei einem System wird aus dem Untergrund das mit Schadstoffen belastete Material bzw. das mit Schadstoffen belastete Grundwasser entnommen und von den Schadstoffen befreit oder es wird der Schadstoff aus dem vor Ort belassenen Grundwasser oder Erdreich entfernt.

Ein Verfahren zur Entfernung von leicht flüchtigen Schadstoffen, beispielsweise chlorierten oder fluorierten Kohlenwasserstoffen, Kohlenwasserstoffen, besteht darin, oberhalb des Grundwasserspiegels Luft abzusaugen. Dabei wird die mit dem flüchtigen Schadstoff angereicherte Luft abgesaugt, und es gelangt von der Erdoberfläche unbeladene Luft an ihre Stelle, die sodann auf Grund des Dampfdruckes der Schadstoffe mit denselben angereichert wird. Hiebei liegt einerseits ein großer Energieaufwand durch das Absaugen der Luft vor und andererseits besteht die Gefahr, daß keine ausreichende Dekontaminierung des Grundwasserstromes bewerkstelligt ist, so daß entweder ein kontaminierter Grundwasserstrom weiterfließt oder zusätzliche Absaugstellen vorgesehen werden müssen.

Eine weitere Verfahrensweise zur Behandlung des Grundwassers besteht darin, daß die natürliche Strömung des Grundwasserstromes genutzt wird und das Grundwasser hiebei durch Behandlungsbetten geleitet wird, welche stationär angeordnet sind. Hiefür ist es erforderlich, daß der gesamte Grundwasserstrom, welcher kontaminiert ist, einer Behandlung zugeführt wird. Dabei besteht die Möglichkeit, quer zu dem gesamten kontaminierten Grundwasserstrom eine Wand vorzusehen, die beim Durchtritt des Grundwasserstromes die Schadstoffe aufnimmt oder umwandelt. Ist die Kontamination des Grundwassers lediglich geringfügiger und der Grundwasserstrom mengenmäßig geringfügig, so kann eine im wesentlichen fluiddichte Wand vorgesehen sein, in welcher Bereiche vorgesehen sind, die für den Grundwasserstrom durchlässig sind und gleichzeitig Agenzien zur Aufnahme bzw. Umwandlung der Schadstoffe im Grundwasserstrom aufweisen.

Aus der DE-44 25 061-C, von welchem Stand der Technik die vorliegende Erfindung ausgeht, ist ein permeables Behandlungsbett zur Reinigung kontaminierter Grundwasserströme bekannt. Bei dieser technischen Lösung wird eine Wand quer zum Grundwasserstrom mit Bausteinen aufgebaut. Diese Bausteine weisen in Abstand zueinander angeordnete Wandelemente auf, die über ein Distanzelement verbunden sind. Diese Bausteine sind weiters zueinander versetzt angeordnet. In dem von diesen umschlossenen Hohlraum wird das Dekontaminierungsmittel eingebracht, welches in loser Form vorliegt. Zur Entnahme des Dekontaminierungsmittels sind eigene Vorrichtungen, welche sowohl das Grundwasser als auch das Dekontaminationsmittel aus dem Hohlraum aufsaugen, erforderlich. Die Wände der Wandelemente können auch perforiert sein, obwohl der Zutritt des kontaminierten Grundwasserstromes über die konstruktiv bedingten Soll-Durchtrittsöffnungen zwischen den einzelnen Bausteinen erfolgen soll.

Der Gegebenheit, daß Agenzien für die Schadstoffe im Grundwasserstrom erschöpft, z. B. beladen, sind und damit einfach austauschbar sein sollen, ist in der Regel nicht Rechnung getragen. So soll bei der konstruktiven Ausführung gemäß der DE-44 25 061-C dem Austausch der Aktivkohle od. dgl. dadurch Rechnung getragen werden, daß durch zusätzliches Einführen von Wasser ein Aufschlämmen derselben erfolgt und anschließend abgesaugt wird. Es liegt hier ein besonders großer technischer Aufwand vor, wobei gleichzeitig das Wasser, mit welchem die Aufschlämmung erfolgt, als Sonderabfall entsorgt werden muß.

In der WO 93/22241 wird eine weitere Vorrichtung zur Behandlung von Grundwasserströmen beschrieben. 13ei dieser ist im Untergrund eine im wesentlichen wasserdichte Wand angeordnet, die Bereiche aufweist, welche für den Grundwasserstrom durchlässig sind. Diese Bereiche, die beispielsweise durch zylindrische Wände gebildet und bis in den nicht grundwasserführenden Bereich abgesenkt sind, weisen ebenfalls Agenzien für die kontaminierenden Stoffe des Grundwassers auf. Hiebei ist es erforderlich, daß nach Absenken der beispielsweise zylindrischen Bereiche das Erdreich od. dgl. in denselben entfernt wird. Sodann wird in diesem Hohlraum ein metallischer Käfig angeordnet, welcher die Dekontaminationsmittel enthält. Der Austausch der Dekontaminationsmittel, welche gegebenenfalls von einem Geotextil umhüllt sein können, erfordert, daß die Behälter, in welchen dieselben angeordnet sind, ausgetauscht werden, wodurch einerseits, so die Behälter direkt an das kontaminierte Erdreich anschließen, dasselbe einfällt, bzw., so ein zusätzlicher Behälter im Behälter vorgesehen ist, zwischen den beiden Behältern eine Grundwasserströmung erfolgen kann, die mengenmäßig wesentlich größer ist als das durch das Dekontaminationsmittel fließende Grundwasser, so daß die erwünschte Dekontamination des Grundwassers nicht im erforderlichen Ausmaß erfolgt. Zusätzlich besteht die Möglichkeit, daß das Dekontaminationsmittel von einem Geotextil umgeben ist, wodurch die durch das Dekontaminationsmittel hindurchfließende Grundwassermenge auf Grund des Strömungswiderstandes gegenüber dem Nebenstrom zusätzlich begrenzt wird.

Der vorliegenden Erfindung ist die Aufgabe gestellt, eine Vorrichtung zum Dekontaminieren von Grundwasserströmen zu schaffen, mit welcher sichergestellt sein kann, daß der gesamte Grundwasserstrom gleichmäßig mit einem Dekontaminationsmittel beaufschlagbar ist und keine Strömungswege des Grundwassers vorliegen können, die dasselbe ohne Kontakt mit dem Dekontaminationsmittel durch die Wand hindurchtreten lassen.

Die erfindungsgemäße Vorrichtung zum Dekontaminieren von Grundwasserströmen mit einer ununterbrochenen, im wesentlichen fluiddichten, Wand, welche von einem unteren Grundwasserhorizont bis über einen oberen Grundwasserhorizont reicht und zumindest einen Bereich aufweist, welcher in Richtung des Grundwasserstromes gezielt wasserdurchlässig ist und quer zum Grundwasserstrom angeordnete perforierte Wände eines Dekontaminationsraumes zum Eintritt und Austritt des Grundwasserstromes aufweist, in welchem Dekontaminationsmittel für das Grundwasser, z. B. Adsorptionsmittel, Agenzien od. dgl., angeordnet sind, und im wesentlichen bis zur Erdoberfläche reicht und gegebenenfalls mit zumindest einem Deckelelement nach oben abgeschlossen ist, besteht im wesentlichen darin, daß die Dekontaminationsmittel in zumindest einem nach unten verschlossenen Sack aus Geotextilien angeordnet sind, wobei die Geotextilien zumindest an der ersten, in Richtung des Grundwasserstromes gesehen, perforierten, gegebenenfalls beschichteten, Wand unmittelbar anliegt, und der Sack, welcher die Dekontaminationsmittel aufnimmt und trägt, gemeinsam mit dem Dekontaminationsmittel aus dem Dekontaminationsraum mit den perforierten Wänden entfernbar ist. Durch die erste Wand, in Strömungsrichtung gesehen, welche quer zu einem kontaminierten Grundwasserstrom gelegt ist, die sich über die gesamte Höhe des Grundwasserstromes erstreckt und gegenüber dem Untergrund abgedichtet ist, ist sichergestellt, daß kein Bypass entsteht, sondern der gesamte kontaminierte Grundwasserstrom erfaßt wird. Die Quererstreckung der Wand muß so bemessen sein, daß zu beiden seitlichen Enden der Wand lediglich nicht kontaminiertes Grundwasser fließt. Die Wand kann entweder in ihrer Gesamtheit oder nur an bestimmten Stellen Räume mit perforierten Wänden aufweisen, in welchen die Dekontaminationsmittel angeordnet sind. Da diese Räume bis zur Erdoberfläche reichen, können die Dekontaminationsmittel, beispielsweise wenn dieselben erschöpft sind, entnommen werden. Liegen die Dekontaminationsmittel in zumindest einem nach unten verschlossenen Sack aus Geotextilien vor, wobei die Geotextilien zumindest an der ersten, in Strömungsrichtung gesehen, perforierten Wand unmittelbar anliegen, so ist sichergestellt, daß der Grundwasserstrom durch die perforierte Wand in die Geotextilien und sodann in das Dekontaminationsmittel anschließend erneut in die Geotextilien und durch die weitere perforierte Wand wieder aus dem Raum austreten kann. Durch das unmittelbare Anliegen der Geotextilien an der perforierten Wand kann erreicht werden, daß keine Nebenschlußströme eintreten und sodann unbehandeltes Grundwasser durch den Raum hindurchtreten kann, ohne einen wesentlichen Kontakt mit den Dekontaminationsmitteln aufzuweisen. Ist der Sack, welcher die Dekontaminationsmittel aufnimmt und trägt gemeinsam mit den Dekontaminationsmittel aus dem Raum mit den perforierten Wänden entfernbar, so kann mit einfachsten Mitteln ein Austausch der Dekontaminationsmittel durchgeführt werden, da es lediglich erforderlich ist, den Sack aus dem Raum herauszuheben, und es kann unmittelbar darauf bereits der Raum mit einem neuen Sack mit Dekontaminationsmittel gefüllt werden. Das verbrauchte Dekontaminationsmittel kann sodann entweder vor Ort oder in einer eigenen Regeneriereinrichtung aufbereitet werden.

Sind die an den perforierten Wänden anliegenden Geotextilien über Bänder miteinander verbunden, so liegt ein sogenanntes Zweiwandgewebe vor, wobei eine vorbestimmte Formgebung bei dem Sack, wenn derselbe mit Dekontaminationsmittel gefüllt wird, vorliegt, so daß ein besonders sattes Anliegen der Geotextilien an den perforierten Wänden gewährleistet sein kann.

Sind die Perforationen der Wand zusätzlich mit einem Geotextil abgedeckt, das außerhalb des Dekontaminationsraumes angeordnet ist, so kann verhindert werden, daß feinteilige Schlämme od. dgl. in den Raum eindringen und so unerwünscht den Strömungswiderstand des Raumes vergrößern.

Sind die perforierten Wände gegenüber dem grundwasserfreien Bereich mit Beton, Bentonit od. dgl. abgedichtet, so liegt eine besonders einfache und gleichzeitig wirksame Konstruktion vor, die auch keine zusätzliche Belastung des Grundwasserstromes bewirkt.

Sind die perforierten Wände mit gelochten Holzplatten gebildet, so können nach Beendigung des Dekontaminierens des Grundwassers und Abbau der Dekontaminationseinrichtung die perforierten Wände nach Entnahme des Dekontaminationsmittels im Erdreich verbleiben, da dieselben keine besondere Strömungsbarriere darstellen und gleichzeitig durch Verrotten des Holzes der noch geringfügig verbleibende größere Strömungswiderstand mit der Zeit abgebaut wird.

Ist der Dekontaminationsraum zur Aufnahme des Dekontaminationsmittels mit zueinander parallel angeordneten perforierten Wandelementen aufgebaut, so ist gleichgültig in welchem Bereich ein Grundwasserstrom in den Raum eintritt, eine vorbestimmte einheitliche Verweilzeit des Grundwasserstromes im Dekontaminationsmittel gewährleistet.

Ist der Raum oberhalb des Grundwasserstromes zumindest teilweise frei von Dekontaminationsmittel und weist einen Manneinstieg auf, so kann besonders einfach und wirksam ein Austausch des Dekontaminationsmittels erfolgen, wobei weiters Proben des Dekontaminationsmittels auch aus unterschiedlichen Tiefen entnommen werden können.

Ist der Dekontaminationsraum gegen Oberflächenwässer abgedichtet, so wird verhindert, daß eine Verdünnung der Verunreinigungen im Grundwasserstrom des Dekontaminationsraum durchgeführt wird, welche einer wirksamen Dekontaminierung des Grundwasserstromes entgegensteht.

Ist zwischen der perforierten Wand und den grundwasserführenden Schichten Kies angeordnet, so kann eine besonders gleichmäßige Anströmung der perforierten Wand durch den Grundwasserstrom erreicht werden.

Sind mehrere Säcke, insbesondere nebeneinander, in dem Dekontaminationsraum angeordnet, so kann auch mit einem Hebezeug, das nur geringeres Gewicht heben kann, ein Austausch des Dekontaminationsmittels durchgeführt werden, wobei weiters die Öffnung, aus welcher die Säcke entfernt werden können, nicht übermäßig groß dimensioniert sein muß.

Sind die Säcke mit dem Dekontaminationsmittel lediglich schlaff gefüllt, so kann auf einfache Weise ein gutes Anliegen der Geotextilien aneinander und an den perforierten Wänden sichergestellt sein, da ein schlaff gefüllter Sack lediglich einen geringen Widerstand gegenüber einer Formänderung aufweist.

Sind die Geotextilien ein Wirrfaservlies aus organischen Fasern, z. B. Polyethylen oder Polypropylen, so ist eine besonders hohe Lebensdauer der Säcke gewährleistet, wobei weiters auf besonders bewährte Substanzen rückgegriffen werden kann.

Schließen an zumindest einer perforierten Wand beidseitig derselben fluiddichte Wände an, so ist eine Konstruktion gewährleistet, die nicht in ihrer Gesamtheit Dekontaminationsmittel aufweist, sondern lediglich Bereiche besitzt, durch welche der gesammelte Grundwasserstrom hindurchgeleitet wird, so daß beispielsweise die undurchlässigen Wände durch Spundwände, also einfachste Mittel, realisiert werden können.

Im folgenden wird die Erfindung anhand der Zeichnungen näher erläutert.

Es zeigen:
Fig. 1 zeigt in schematischer Ansicht von vorne eine Wand mit perforierten Wandelementen,
Fig. 2 die Wand gemäß Fig. 1 mit anschließenden fluiddichten Wandteilen und
Fig. 3 einen Schnitt der Wand entlang der Linie III - III gemäß Fig. 2.

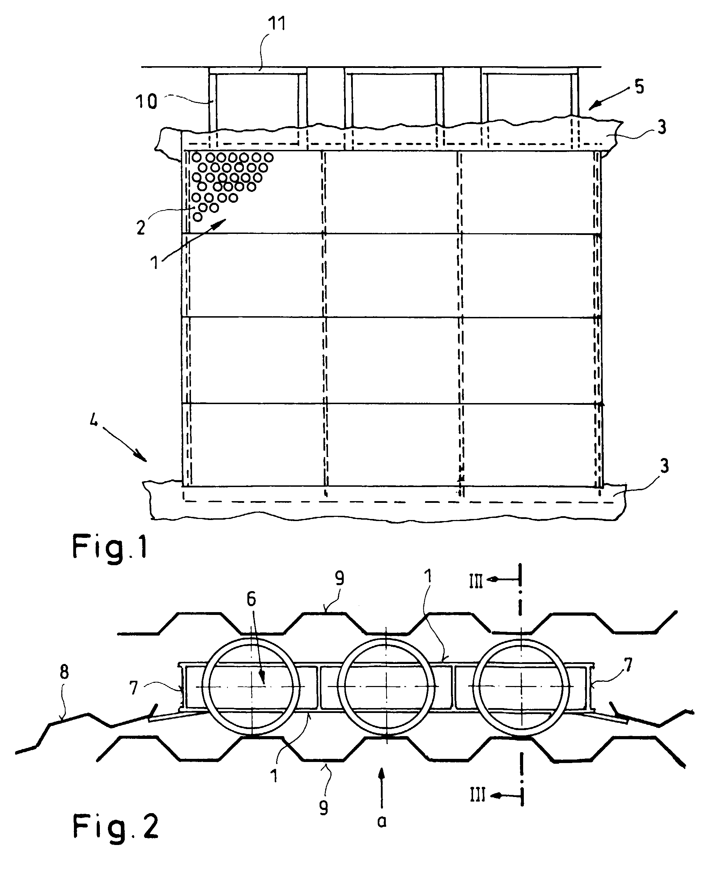

Die in Fig. 1 gezeigte perforierte Wand 1 ist mit gelochten Holzplatten 2 aufgebaut. Die kreisrunden Perforationen weisen einen Durchmesser von 3,0 cm auf. Anstelle der gelochten Holzplatten können auch andere perforierte Elemente, wie Streckgitter, Kunststoffgitter, Lochbleche, zum Einsatz gelangen. Die perforierte Wand 1 mit einer Höhe von 400 cm ist über Beton 3 in dem nicht mehr grundwasserführenden Bereich 4 und dem oberen Bereich 5, welcher ebenfalls grundwasserfrei ist, abgedichtet. Zur Abdichtung ist auch besonders Bentonit geeignet.

Wie besonders deutlich aus Fig. 2 ersichtlich, sind zwei perforierte Wände 1 parallel in Abstand von 50 cm zueinander angeordnet, wodurch ein Dekontaminationsraum 6 gebildet ist, der gegenüber dem Erdreich und damit dem Grundwasserstrom über Seitenwände 7 mit einem Abstand von 480 cm zueinander, die flüssigkeitsdicht mit den perforierten Wänden 1 verbunden sind, gebildet ist. Quer zur Richtung des Grundwasserstromes, die durch den Pfeil a angezeigt ist, sind fluiddichte Wände 8 angeordnet. Diese fluiddichten Wände 8 sind mit der in Strömungsrichtung zuerst beaufschlagten perforierten Wand 1 flüssigkeitsdicht verbunden. Die fluiddichten Wände sind durch Spundwände gebildet.

Um die perforierten Wände 1 zu setzen, werden Spundwände 9 aus Stahl gesetzt. Sodann wird der Zwischenraum ausgebaggert und es werden die gelochten Holzplatten 2 mit den Seitenwänden 7 gesetzt. Nach oben werden Betonringe 10 aufgesetzt, die als Mannloch dienen und über einen Deckel 11 verschlossen sind. Die Oberfläche und Deckel können ohne besondere Vorkehrungen befahren werden. Dadurch wird der Zutritt von Oberflächenwässern in den Dekontaminationsraum 6 verhindert. Der Zwischenraum zwischen gelochten Holzplatten 2 und den Spundwänden 9 kann zur Abdichtung mit Beton oder Bentonit an seiner Sohle versehen werden, worauf eine Kiesschicht 17, u. zw. als Filterkies, eingebracht wird, auf den sodann erneut eine Beton- oder Bentonitschicht 3 zur weiteren Abdichtung der perforierten Wand 1 aufgegeben wird. Anschließend können die Spundwände 9, nachdem der Beton erhärtet ist, gezogen werden, so daß der Grundwasserstrom über die fluiddichten Wände 8 zum Dekontaminationsraum 6 geleitet wird, in dem ein Dekontaminationsmittel 16 angeordnet ist.

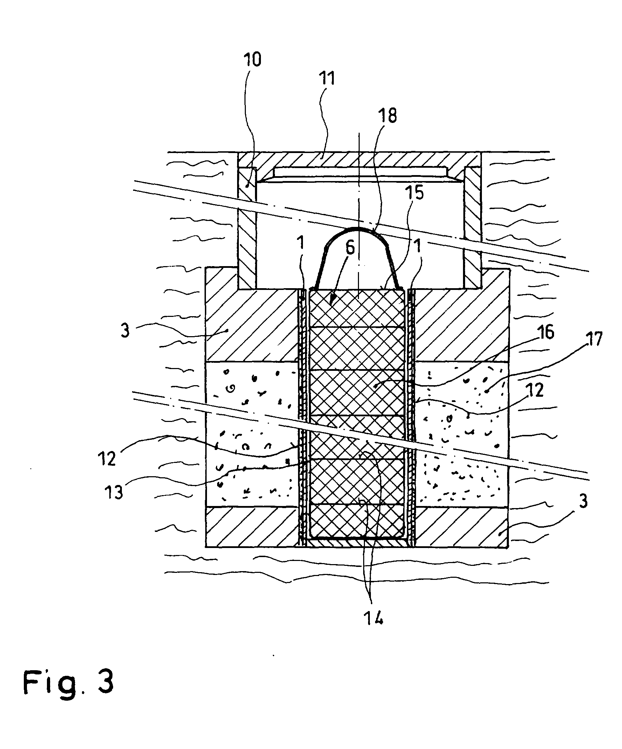

Wie besonders deutlich in Fig. 3 zu sehen, sind die perforierten Wände 1 außen mit einem Geotextil 12, u. zw. einem Wirrfaservlies aus Polypropylenfasern, umgeben. An das Wirrfaservlies schließt sodann eine Kiesschicht 17 an, so daß sowohl die Anströmung des Dekontaminationsraumes 6 mit Grundwasser als auch das Abströmen desselben mit einem gleichmäßigen Fließwiderstand besonders gut gewährleistet ist. Besonders deutlich ist auch die Abdichtung der perforierten Wände gegenüber den nicht grundwasserführenden Bereichen ersichtlich. Im Dekontaminationsraum 6 ist ein Geotextil, u. zw. ein Wirrfaservlies aus Polypropylenfasern oder Gewebe mit einem Flächengewicht von 500 g/m², ein sogenanntes Zweiwandgewebe, angeordnet, bei dem über die Bänder 14 eine vorgegebene Struktur auch bei schlaff eingefülltem Dekontaminationsmittel gewährleistet ist. Durch dieses Geotextil wird ein unten verschlossener Sack 15 gebildet, welcher ein sattes Anliegen desselben an den perforierten Wänden gewährleistet, womit jegliche Nebenströme des Grundwassers außerhalb des Dekontaminationsmittels verhindert sind. Im Sack 15 ist ein Dekontaminationsmittel 16, in der Regel eine körnige Substanz, angeordnet. Bänder 18 sind in einer Vielzahl an den Säcken angeordnet, z. B. angenäht, durch welche Haltelaschen gebildet werden, mit welchen die Säcke in den Dekontaminationsraum abgesenkt und wieder entnommen werden können. Bei größeren Dekontaminationsräumen können mehrere Säcke über- und/oder nebeneinander angeordnet werden. Zum Dekontaminieren von Grundwasserströmen, die beispielsweise mit Kohlenwasserstoffen, chlorierten oder fluorierten Kohlenwasserstoffen, Farbstoffen od. dgl. belastet sind, eignet sich Aktivkohle besonders. Ist diese Aktivkohle sodann mit den Verunreinigungen beladen, so kann dieselbe gemeinsam mit dem Sack entnommen werden und entweder vor Ort oder an einer geeigneten Stelle regeneriert werden. Es kann sodann über das Mannloch erneut ein Sack mit Dekontaminationsmittel eingebracht werden.

Anstelle von einem Adsorptionsmittel oder zusätzlich zu diesem können auch chemisch aktive Agensien, z. B. Eisenspäne zur Dechlorierung von Perchlorethylen, lonenaustauscherharze, biologisch aktive Substanzen, in den Säcken angeordnet sein. Bei hohen Kontaminationen des Grundwassers kann auch die Wand in ihrer Gesamtheit als Dekontaminationsraum ausgebildet sein. Weiters können Sonden in Strömungsrichtung gesehen nach der Wand angeordnet werden, um Grundwasserproben für Analysen zu entnehmen.

## Patentansprüche

1. Vorrichtung zum Dekontaminieren von Grundwasserströmen mit einer ununterbrochenen, im wesentlichen fluiddichten, Wand (8), welche von einem unteren Grundwasserhorizont bis über einen oberen Grundwasserhorizont reicht und zumindest einen Bereich aufweist, welcher in Richtung (a) des Grundwasserstromes gezielt wasserdurchlässig ist und quer zum Grundwasserstrom angeordnete perforierte Wände(I) eines Dekontaminationsraumes (6) zum Eintritt und Austritt des Grundwasserstromes aufweist, in welchem Dekontaminationsmittel für das Grundwasser, z. B. Adsorptionsmittel, Agenzien od. dgl., angeordnet sind, und im wesentlichen bis zur Erdoberfläche reicht und gegebenenfalls mit zumindest einem Deckelelement (11) nach oben abgeschlossen ist, *dadurch gekennzeichnet,* daß die Dekontaminationsmittel (16) in zumindest einem nach unten verschlossenen Sack (15) aus Geotextilien angeordnet sind, wobei die Geotextilien (13) zumindest an der ersten, in Richtung (a) des Grundwasserstromes gesehen, perforierten, gegebenenfalls beschichteten, Wand (1) unmittelbar anliegt, und der Sack (15), welcher die Dekontaminationsmittel (16) aufnimmt und trägt, gemeinsam mit dem Dekontaminationsmittel aus dem Dekontaminationsraum (6) mit den perforierten Wänden (1) entfernbar ist.

2. Vorrichtung nach Anspruch 1, dadurch gekennzeichnet, daß die an den perforierten Wänden (1) anliegenden Geotextilien (13) eines Sackes (15) über Bänder (14) miteinander verbunden sind.

3. Vorrichtung nach Anspruch 1 oder 2, dadurch gekennzeichnet, daß die Perforationen der Wand (1) zusätzlich mit einem Geotextil (12) abgedeckt sind, das außerhalb des Dekontaminationsraumes (6) angeordnet ist.

4. Vorrichtung nach Anspruch 1, 2 oder 3, dadurch gekennzeichnet, daß die perforierten Wände (1) gegenüber dem/den grundwasserfreien Bereich(en) (4, 5) mit Beton (3), Bentonit od. dgl. abgedichtet sind.

5. Vorrichtung nach einem der Ansprüche 1 bis 4, dadurch gekennzeichnet, daß die perforierte Wand (1) mit gelochten Holzplatten (2) gebildet ist.

6. Vorrichtung nach einem der Ansprüche 1 bis 5, dadurch gekennzeichnet, daß der Dekontaminationsraum (6) zur Aufnahme des Dekontaminationsmittels (16) mit zueinander parallel angeordneten perforierten Wandelementen aufgebaut ist.

7. Vorrichtung nach einem der Ansprüche 1 bis 6, dadurch gekennzeichnet, daß der Dekontaminationsraum (6) zur Aufnahme des Dekontaminationsmittels (16) oberhalb des Grundwasserstromes zumindest teilweise frei von Dekontaminationsmittel ist und einen Manneinstieg aufweist.

8. Vorrichtung nach einem der Ansprüche 1 bis 7, dadurch gekennzeichnet, daß der Dekontaminationsraum (6) gegenüber Oberflächenwässer abgedichtet ist.

9. Vorrichtung nach einem der Ansprüche 1 bis 8, dadurch gekennzeichnet, daß zwischen zumindest einer perforierten Wand (1) und den grundwasserführenden Schichten Kies (17) angeordnet ist.

10. Vorrichtung nach einem der Ansprüche 1 bis 9, dadurch gekennzeichnet, daß mehrere Säcke (15), insbesondere nebeneinander, in dem Dekontaminationsraum (6) angeordnet sind.

11. Vorrichtung nach einem der Ansprüche 1 bis 10, dadurch gekennzeichnet, daß die Säcke (15) mit dem Dekontaminationsmittel schlaff gefüllt sind.

12. Vorrichtung nach einem der Ansprüche 1 bis 11, dadurch gekennzeichnet, daß die Geotextilien (12, 13) ein Wirrfaservlies aus organischen Fasern, z. B. Polyethylen oder Polypropylen, sind.

13. Vorrichtung nach einem der Ansprüche 1 bis 12, dadurch gekennzeichnet, daß an zumindest einer perforierten Wand (1) beidseitig derselben fluiddichte Wände (8) anschließen.

## Claims

1. Device for decontamination of groundwater streams with an uninterrupted, essentially fluid-tight wall (8) which extends from a lower groundwater table to above an upper groundwater table and exhibits at least one area which is deliberately water permeable in the direction (a) of the groundwater stream and exhibits perforated walls (1) of a decontamination chamber (6) disposed transversely to the groundwater stream for entry and exit of the groundwater stream in which decontamination means for the groundwater, e.g. adsorption means, agents or the like, are disposed, and essentially extends to the surface of the ground and is possibly closed at the top with at least one lid element (11), characterised in that the decontamination means (16) are arranged in at least one sack (15) which is made of geotextiles and closed at the bottom, whereby the geotextiles (13) bear directly at least on the first wall (1) which is perforated viewed in the direction (a) of the groundwater stream and possibly coated, and the sack (15) which accommodates and carries the decontamination means (16) can be removed together with the decontamination means from the decontamination chamber (6) with the perforated walls (1).

2. Device according to claim 1, characterised in that the geotextiles (13) of a sack (15) bearing on the perforated walls (1) are connected together by means of bands (14).

3. Device according to claim 1 or 2, characterised in that the perforations of the wall (1) are additionally covered with a geotextile (12) which is arranged outside the decontamination chamber (6).

4. Device according to claim 1, 2 or 3, characterised in that the perforated walls (1) facing the groundwater-free area or areas (4, 5) are sealed with concrete (3), bentonite or the like.

5. Device according to one of claims 1 to 4, characterised in that the perforated wall (1) is formed with holed sheets of wood (2).

6. Device according to one of claims 1 to 5, characterised in that the decontamination chamber (6) for accommodation of the decontamination means (16) is constructed with perforated wall elements arranged parallel to one another.

7. Device according to one of claims 1 to 6, characterised in that above the groundwater stream the decontamination chamber (6) for accommodation of the decontamination means (16) is at least partly free of decontamination means and exhibits a manhole.

8. Device according to one of claims 1 to 7, characterised in that the decontamination chamber (6) is sealed against surface water.

9. Device according to one of claims 1 to 8, characterised in that gravel (17) is arranged between at least one perforated wall (1) and the groundwater bearing strata.

10. Device according to one of claims 1 to 9, characterised in that a plurality of sacks (15) are arranged in the decontamination chamber (6), in particular next to one another.

11. Device according to one of claims 1 to 10, characterised in that the sacks (15) are loosely filled with the decontamination means.

12. Device according to one of claims 1 to 11, characterised in that the geotextiles (12, 13) are a matted fibre fleece made of organic fibres, e.g. polyethylene or polypropylene.

13. Device according to one of claims 1 to 12, characterised in that at least one perforated wall (1) is adjoined by fluid-tight walls (8) on both sides thereof.

## Revendications

1. Dispositif pour la décontamination de courants d'eaux souterraines ayant une paroi (8) ininterrompue, essentiellement imperméable aux fluides, qui s'étend d'un horizon inférieur des eaux souterraines jusqu'à un horizon supérieur des eaux souterraines et présente au moins une région qui est perméable à l'eau de manière ciblée dans le sens (a) du courant d'eaux souterraines et présente des parois (1) perforées d'une chambre de décontamination (6), disposées transversalement au courant d'eaux souterraines, pour l'entrée et la sortie du courant d'eaux souterraines, dans lequel des moyens de décontamination pour l'eau souterraine, par exemple des moyens d'adsorption, des agents chimiques et similaires, sont disposés, et s'étend essentiellement jusqu'à la surface de la terre et le cas échéant est fermé en haut par au moins un élément de couvercle (11), *caractérisé en ce que* les moyens de décontamination (16) sont disposés dans au moins un sac (15) fermé en bas, fait en matières géotextiles, les matières géotextiles (13) reposant directement contre la première paroi (1) perforée, le cas échéant revêtue, vue dans le sens (a) du courant d'eaux souterraines, et le sac (15) qui contient et porte les moyens de décontamination (16) peut être enlevé conjointement avec les moyens de décontamination de la chambre de décontamination (6) aux parois (1) perforées.

2. Dispositif selon la revendication 1, caractérisé en ce que les matières géotextiles (13) d'un sac (15) reposant contre les parois perforées (1) sont reliées les unes avec les autres par des bandes (14).

3. Dispositif selon la revendication 1 ou 2, caractérisé en ce que les perforations de la paroi (1) sont en outre recouvertes d'une matière géotextile (12) qui est disposée en dehors de la chambre de décontamination (6).

4. Dispositif selon la revendication 1, 2 ou 3, caractérisé en ce que les parois (1) perforées sont rendues étanches par rapport à / aux région(s) libre(s) d'eaux souterraines (4, 5) avec du béton (3), de la bentonite ou similaire.

5. Dispositif selon une des revendications 1 à 4, caractérisé en ce que la paroi (1) perforée est faite avec des plaques de bois (2) trouées.

6. Dispositif selon une des revendications 1 à 5, caractérisé en ce que la chambre de décontamination (6) destinée à recevoir le moyen de décontamination (16) est construite avec des éléments de paroi perforés disposés parallèlement les uns aux autres.

7. Dispositif selon une des revendications 1 à 6, caractérisé en ce que la chambre de décontamination (6) destinée à recevoir le moyen de décontamination (16) est au moins en partie libre de moyen de décontamination au-dessus du courant d'eaux souterraines et présente un trou d'homme.

8. Dispositif selon une des revendications 1 à 7, caractérisé en ce que la chambre de décontamination (6) est rendue étanche par rapport aux eaux de surface.

9. Dispositif selon une des revendications 1 à 8, caractérisé en ce que du gravier (17) est disposé entre au moins une paroi perforée (1) et les couches contenant des eaux souterraines.

10. Dispositif selon une des revendications 1 à 9, caractérisé en ce que plusieurs sacs (15) sont disposés, en particulier les uns à côté des autres, dans la chambre de décontamination (6).

11. Dispositif selon une des revendications 1 à 10, caractérisé en ce que les sacs (15) sont remplis de manière lâche avec le moyen de décontamination.

12. Dispositif selon une des revendications 1 à 11, caractérisé en ce que les matières géotextiles (12, 13) sont un matelas de fibres emmêlées fait de fibres organiques, par exemple du polyéthylène ou du polypropylène.

13. Dispositif selon une des revendications 1 à 12, caractérisé en ce que des parois (8) imperméables aux fluides sont adjacentes au moins à une paroi (1) perforée des deux côtés de celle-ci.
